# FASCICULE DE BREVET EUROPEEN

(11) **EP 0 807 539 B1**
(45) Date de publication et mention de la délivrance du brevet: **26.06.2002**
(21) Numéro de dépôt: 97106491.0
(22) Date de dépôt: 18.04.1997
(51) Int. Cl.: B60B 21/10, B60B 21/02

(54) **Roue avec jante ayant des sièges inclinés vers l'extérieur**
Rad auf Nabe mit nach aussen geneigten Schultern
Wheel with rim,the seats of which are inclined to the outside

(30) Priorité: 15.05.1996 FR 9606254
(43) Date de publication de la demande: 19.11.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Bapt, Jean-Louis, 63670 La Roche-Blanche (FR); Muhlhoff, Olivier, 63100 Clermont-Ferrand (FR)
(74) Mandataire: Diernaz, Christian

(56) Documents cités:
- EP-A- 0 138 027
- DE-A- 3 236 610
- DE-A- 4 422 726
- FR-A- 2 699 121
- GB-A- 2 117 332
- GB-A- 2 121 738
- US-A- 3 977 727

## Description

L'invention a pour objet une roue, composée d'un disque de roue et d'une jante de montage monobloc pour pneumatique, de préférence à armature de carcasse radiale, et susceptible de former éventuellement, avec un anneau de soutien de bande de roulement et ledit pneumatique, un ensemble roulant pouvant être utile dans le cas de roulage où la pression de gonflage s'abaisse anormalement par rapport à la pression normale d'emploi, dite pression nominale de service, pression pouvant même devenir nulle.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule. Les techniques proposées et bien connues pour éviter de tels décoincements, et en particulier celle consistant à disposer axialement à l'intérieur du siège extérieur de jante une saillie ou hump de faible hauteur, ne semblent pas donner entière satisfaction et tendent à augmenter les difficultés de montage et de démontage des pneumatiques.

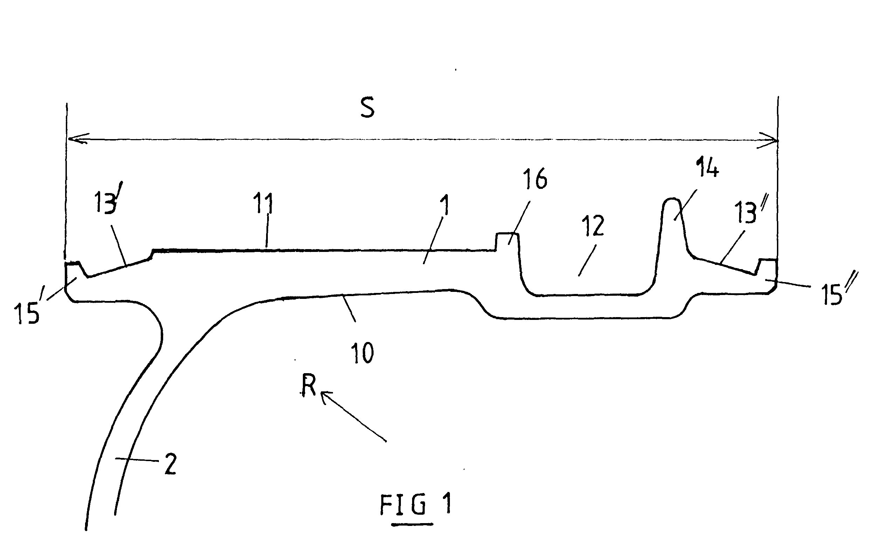

La demande française N° 2 699 121 décrit une roue selon le préambule de la revendication 1 à titre d'exemple, en vue de résoudre efficacement le problème ci-dessus, une jante de roue monobloc (1) telle que montrée sur la figure 1. Ladite jante (1) est délimitée axialement par deux bords de jante, distants axialement de la largeur S de jante. Ladite jante (1) comprend, vue en section méridienne,
- un premier siège de jante (13') ayant une génératrice dont l'extrémité axialement extérieure est sur un cercle de diamètre inférieur au diamètre du cercle sur lequel se trouve l'extrémité axialement intérieure (le siège est alors dit incliné vers l'extérieur), et délimité axialement à l'extérieur par une saillie ou hump (15') de faible hauteur,
- un deuxième siège de jante (13") ayant une génératrice dont l'extrémité axialement intérieure est, d'une part sur un cercle de diamètre au moins égal au diamètre du cercle sur lequel se trouve l'extrémité axialement intérieure de la génératrice du premier siège de jante, (et dans le cas montré sur la fig. 1 de ladite demande, sur un cercle de diamètre égal à celui sur lequel se trouve l'extrémité axialement intérieure), et d'autre part sur un cercle de diamètre supérieur au diamètre du cercle sur lequel se trouve son extrémité axialement extérieure, ladite deuxième génératrice étant aussi prolongée axialement à l'extérieur par une saillie (15") et axialement à l'intérieur par un rebord de jante (14).

Selon les différences de diamètres respectifs des cercles sur lesquels se trouvent les extrémités axialement intérieures des deux sièges de jante, ladite jante peut être ou non pourvue d'une gorge de montage (12), située préférentiellement axialement à proximité du deuxième siège de jante (13").

Ladite jante (1) est destinée à être utilisée de manière avantageuse avec un appui de soutien de bande de roulement (non montré), appui de soutien élastique, amovible et enfilable sur une portée de jante (11), dont la génératrice peut être rectiligne ou non, et, si rectiligne, parallèle ou non à l'axe de rotation, une butée de positionnement (16), située entre ladite portée (11) et la gorge de montage (12), permettant en collaboration avec un des bourrelets du pneumatique le positionnement axial de l'appui de soutien.

La profondeur de la gorge de montage ainsi que les contraintes de fonctionnement à ne pas dépasser, imposent, dans le cas d'une fabrication de la roue en acier et le profil radialement extérieur souhaité étant donné, des épaisseurs de métal variables axialement, et ainsi un profil méridien radialement intérieur, tel que montré sur la figure 1. Il ressort de l'examen de ladite figure, et ceci dans la presque totalité des montes possibles de pneumatique sur des jantes de ce type, que l'espace disponible radialement sous la gorge de montage (12) est fortement réduit par rapport à l'encombrement radialement sous la portée (11).

Le fait que la gorge de montage soit axialement située plus près d'un bord de jante que le milieu de la portée, risque de conduire à l'accumulation, sous la portion correspondante de la portée, de toutes sortes de matières, telle que la boue plus ou moins mélangée à des cailloux, telle que la neige ou glace en conditions hivernales, matières difficilement évacuables. En outre, le souci constant du moindre poids d'une jante conduit à l'utilisation pour sa fabrication d'un matériau à faible densité. Cet emploi permet la réalisation sous forme de roue, jante (1) et disque étant alors moulés conjointement, mais entraîne par contre des modifications sérieuses des profils méridiens respectivement radialement intérieur et extérieur, de manière à correctement rigidifier ladite roue, étant donné les conditions sévères imposées par un roulage sous pression nulle ou faible.

Afin de permettre l'obtention d'une légèreté optimale et de remédier aux inconvénients ci-dessus, la roue, conforme à l'invention, est composée d'une jante avec un premier et un deuxième sièges de jante, au moins le premier siège de jante ayant une génératrice dont l'extrémité axialement extérieure est sur un cercle de diamètre inférieur au diamètre du cercle sur lequel se trouve l'extrémité axialement intérieure, ledit premier siège de jante étant prolongé axialement à l'extérieur par une saillie ou hump de faible hauteur et axialement à l'intérieur par une portée destinée à recevoir un anneau de soutien de bande de roulement, et d'un disque de roue réuni du côté du premier siège de jante à la paroi radialement intérieure de la jante. La portée de jante est, radialement à l'extérieur, munie d'éléments en relief séparés par des évidements ou creux.

Sur la majeure partie de la surface totale de la paroi radialement intérieure de la jante de roue, chaque point d'une génératrice de ladite paroi, compris entre le point de tangence de ladite génératrice avec la génératrice correspondante, axialement intérieure du disque, et l'extrémité axialement située du côté du deuxième siège de jante, est sur un cercle de diamètre D_{P}, au moins égal au diamètre D_{A} du cercle sur lequel se trouve ledit point de tangence et au plus égal au diamètre D_{B} du cercle sur lequel se trouve ladite extrémité.

De préférence, la majeure partie de la surface totale de la paroi radialement intérieure représente la totalité de la dite surface. Néanmoins, ladite partie peut être moindre, mais doit cependant être égale à au moins 70% de la surface totale de la paroi, afin de ne pas nuire à l'évacuation des matières accumulées à l'intérieur de la jante.

La roue est avantageusement en matériau(x) de faible densité, tels que les métaux que sont l'aluminium, le magnésium et tous les alliages dérivés de ces métaux, ou tels que les matières thermoplastiques ou thermodurcissables, chargées ou non.

Par saillie de faible hauteur, il faut entendre une saillie dont la hauteur est préférentiellement au plus égale à 2,5% du diamètre nominal de la jante de montage, qui est le diamètre du cercle sur lequel se trouve l'extrémité axialement intérieure du premier siège de jante.

Si l'on appelle taux d'entaillement de la portée de jante, préférentiellement cylindrique, le rapport de la surface occupée par les évidements ou creux sur la surface totale de la face radialement extérieure de la portée, ledit taux d'entaillement est préférentiellement compris entre 0,4 et 0,9.

Les éléments en relief peuvent être, d'une part au moins deux nervures circonférentielles formant les bords axiaux de la portée, et d'autre part des blocs ou plots de matériau. Les éléments en relief peuvent être aussi, en plus des nervures circonférentielles ci-dessus, des nervures transversales ou quasi-transversales, rattachées aux nervures circonférentielles, et délimitant entre elles des creux pouvant avoir des volumes variés en forme et en grandeur. Les nervures transversales, continues ou discontinues, peuvent en particulier présenter sur la face radialement extérieure de la portée des surfaces de formes variées, délimitées par des côtés transversaux de configurations diverses : rectiligne, courbe, ligne brisée, parallèle ou non ... etc..... Pour la simplicité de fabrication de la roue, lesdits côtés seront de préférence rectilignes de manière à conférer aux évidements une forme quadrilatère, qui pourra être rectangle, carrée, trapézoïdale, losangée ou autre. Les côtés rectilignes seront préférentiellement orientées par rapport à la direction circonférentielle d'un angle au moins égal à 45°, quelle que soit la forme géométrique des creux. De même, que les deux côtés rectilignes transversaux d'une nervure transversale soient parallèles ou non, il est avantageux que la largeur d'une nervure, mesurée perpendiculairement à la ligne moyenne transversale de la surface de la nervure, soit au moins égale à 3 mm et au plus égale à 7 mm.

Comme décrit dans le demande FR 699 121, la jante conforme à l'invention a préférentiellement une gorge de montage située vers le deuxième siège de jante. Un des creux, et plus précisément le creux dans lequel débouche l'orifice de passage de la valve de gonflage, est préférentiellement relié à la gorge de montage par une rainure, permettant ainsi le libre passage du gaz de gonflage et le démontage plus facile de l'ensemble pneumatique-anneau de soutien de la roue.

Dans le cas de nervures transversales, ces dernières peuvent être avantageusement discontinues, un (des) creux séparant les branches de nervure, ou alors lesdites nervures étant percées chacune par un (des) trous ; les deux variantes permettant une égalité de pression dans tous les creux de la portée.

Les cavités ou creux délimités par les nervures circonférentielles et les nervures transversales ont avantageusement des volumes inégaux. En particulier, les nervures transversales ou quasi-transversales peuvent être disposées circonférentiellement selon des pas variables. Il en est de même des blocs qui ne sont pas équidistants les uns des autres.

Quant à la face radialement intérieure de la jante, elle est préférentiellement uniforme, mais peut aussi présenter, par exemple, des nervures et rainures transversales. De manière préférentielle, la plus grande partie de ladite face sera uniforme, la partie restante étant formée d'au moins une nervure transversale dont la génératrice radialement la plus à l'intérieur peut comporter des points se trouvant sur des cercles de diamètres supérieurs au diamètre du cercle sur lequel se trouve le point de tangence de la génératrice avec la génératrice du disque. Dans le cas de la présence de plusieurs nervures transversales dont les bases d'ancrage à la face radialement intérieure de la jante ne peuvent occuper qu'une aire au plus égale à 30% de la surface totale de la paroi radialement intérieure, lesdites nervures sont circonférentiellement et régulièrement espacées et utilisées comme nervures de renforcement, afin d'éviter les défauts engendrés par les concentrations de contrainte éventuelles générées par les formes de certaines jantes.

L'invention sera mieux comprise à l'aide du dessin annexé à la description qui suit, illustrant des exemples non limitatifs d'exécution d'une roue destinée au montage d'un pneumatique 185/60-14, dessin sur lequel
- la figure 1 est une vue méridienne et schématique d'une roue telle que décrite dans la demande française précitée,
- la figure 2 est une vue méridienne et schématique d'une roue conforme à l'invention,
- la figure 3 est une vue de dessus de la jante de la figure 2,
- la figure 4 est une variante de dessus de jante conforme à l'invention,
- la figure 5 est une autre variante de roue, vue en section méridienne
- la figure 6 montre en section méridienne la roue de la figure 5, dont la face radialement intérieure comporte quatre nervures transversales.

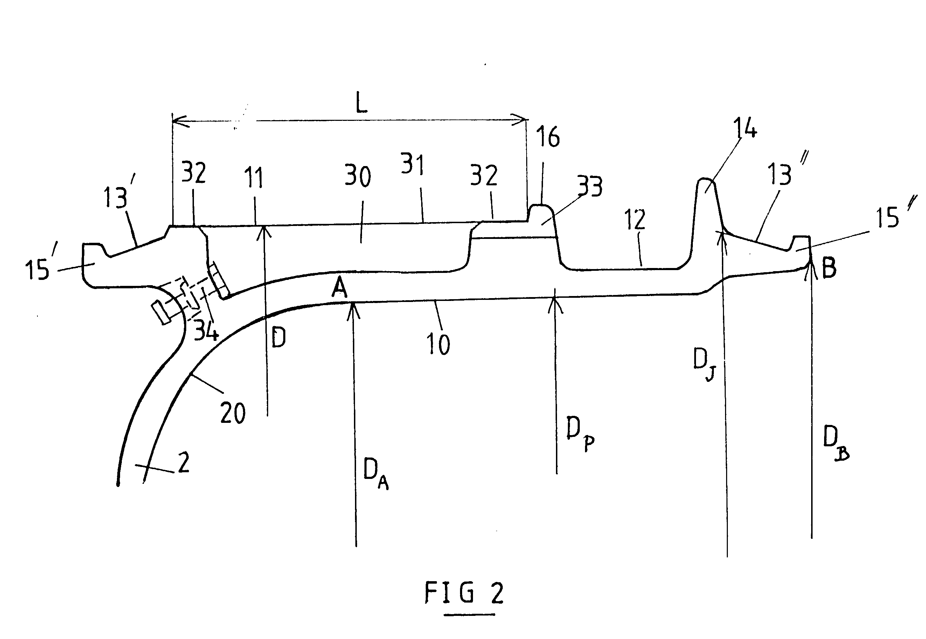

La jante de roue (1), montrée sur la figure 2, reprend en grande partie les caractéristiques de la jante (1) montrée sur la figure 1, c'est-à-dire une jante avec deux sièges de jante (13') et (13") de diamètres égaux et dont les génératrices sont inclinées vers l'extérieur, lesdits sièges de jante étant prolongés axialement à l'extérieur de saillies ou humps (15') et (15") de hauteur égale à 6 mm, ce qui représente environ 0,017 fois le diamètre nominal D_{J} de la jante (1), qui est le diamètre commun des extrémités axialement intérieures des deux sièges de jante (13') et (13"). Le premier siège de jante (13') est prolongé axialement à l'intérieur par une portée (11), elle-même munie à son autre extrémité d'une butée de positionnement (16) de l'anneau de soutien destiné à être monté sur ladite portée (11). Le deuxième siège de jante (13") est prolongé axialement à l'intérieur par un rebord de jante (14), rebord délimitant avec la butée de positionnement (16) une gorge de montage (12).

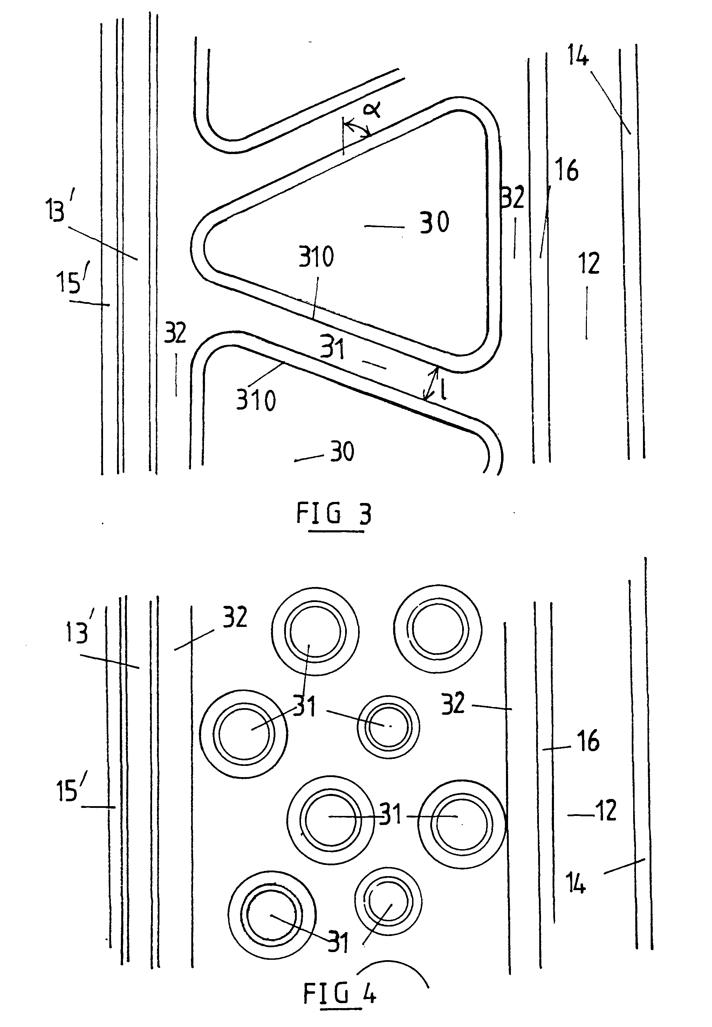

Conformément à l'invention, la portée (11) est munie d'évidements (30) de forme triangulaire (figure 3), lesdits évidements étant délimités axialement par les nervures circonférentielles (32) de la portée (11) et circonférentiellement par les nervures transversales (31), présentant sur la face radialement extérieure de la portée (11) des côtés (310) rectilignes, parallèles entre eux et faisant avec la direction circonférentielle un angle α de 45°. Si l'on appelle S_{E} la surface occupée par les évidements et S_{T} la surface cylindrique totale de la portée (11), S_{T} étant égale à πDL, D et L étant respectivement le diamètre et la largeur axiale de ladite face radialement extérieure de la portée (11), le taux d'entaillement, défini comme le rapport S_{E}/S_{T}, est égal à 0,6. La largeur 1, commune dans l'exemple décrit à toutes les nervures transversales (31), et mesurée perpendiculairement à la direction commune des deux côtés (310) de la surface occupée par une nervure (31), est comprise entre 3 mm et 7 mm. Toutes les arêtes délimitant les éléments en relief sur la face radialement supérieure de la portée sont avantageusement chanfreinées, afin de faciliter le montage de l'appui de soutien de la bande de roulement du pneumatique destiné à être monté sur la jante.

Comme montré sur la figure 2, le passage de valve (34) débouche dans l'un des évidements (30) de la portée (11), ledit évidement étant relié à la gorge de montage (12) par une rainure de faibles dimensions (33), permettant le passage du gaz de gonflage. Cette liaison (33) entre évidement (30) et gorge (12) favorise le démontage de l'ensemble monté : en effet, sans ladite liaison, la dépression, engendrée par le dégonflage, crée un contact étroit entre l'anneau de soutien et les nervures délimitant les évidements, d'où les difficultés de démontage de l'anneau et de l'ensemble.

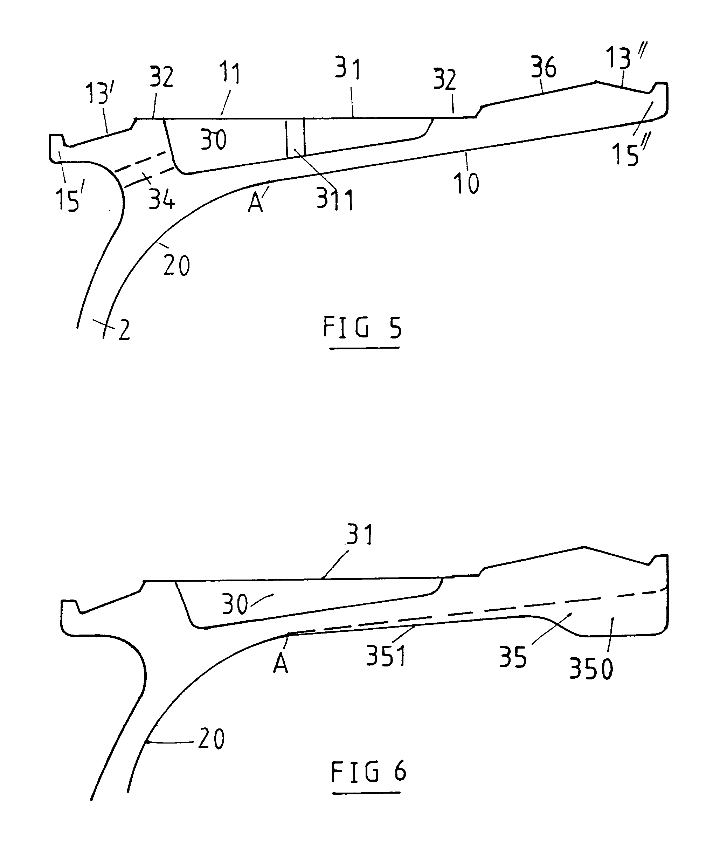

Quant à la génératrice (10) de la paroi radialement intérieure de la jante (1), elle tangente en A la paroi axialement et radialement intérieure du disque de roue (2). Conformément à l'invention, chaque point de ladite génératrice (10), comme chaque point de toute génératrice de ladite paroi, intégralement uniforme dans le cas montré, localisé entre le point A de tangence et son extrémité B du côté du deuxième siège de jante (13"), est sur un cercle de diamètre D_{P}, au moins égal au diamètre D_{A} du cercle sur lequel se trouve le point de tangence A et au plus égale au diamètre D_{B} du cercle sur lequel se trouve l'extrémité B, le passage du diamètre D_{A} au diamètre D_{B}, supérieur à D_{A}, du cercle sur lequel se trouve le point B se faisant de manière continue sur la plus grande partie de la distance axiale séparant le point de tangence A de l'extrémité B, comme montré sur la figure 2. Ceci évite l'amas de corps étrangers à la roue, et rend possible l'évacuation de tels corps vers l'extérieur. Ladite évacuation est d'autant plus facile et plus complète que le diamètre de la paroi radialement intérieure (10) croît de manière continue en allant axialement du cercle sur lequel se trouve le point A au cercle comprenant le point B, comme montré sur la figure 5.

La jante de roue montrée sur la figure 4 diffère principalement de la jante des figures 2 et 3 par le fait que les nervures transversales sont remplacées par des blocs (31) d'aluminium, ou autre matériau rigide, sous forme de troncs de cône. Dans l'exemple montré, lesdits troncs de cône (31) sont de même volume, mais ils peuvent être de volumes différents, du fait que les surfaces de leurs bases peuvent être différentes en dimensions, la seule contrainte à laquelle les blocs (31) sont soumis résidant dans le fait que toutes les bases radialement supérieures desdits blocs sont confondues avec la face radialement supérieure de la portée (11).

La jante de roue montrée sur la figure 5 diffère principalement de la jante de la figure 2 par le fait que le deuxième siège de jante (13") a un diamètre supérieur au diamètre du premier siège (13'), le diamètre d'un siège de jante étant par définition le diamètre de l'extrémité axialement intérieure de sa génératrice, ce qui permet de supprimer la gorge de montage (12) et de la remplacer par une surface tronconique de liaison (36) entre le deuxième siège de jante (13") et la portée (11). On confère ainsi à la génératrice (10) de la paroi radialement intérieure de la jante (1) un profil méridien tronconique et uniforme du point A, de tangence entre ledit profil et la paroi intérieure du disque (2), à son extrémité B, le diamètre de la paroi (10) croissant de manière continue et monotone de A à B. Chaque nervure transversale (31) est pourvue en son milieu d'une rainure (311), permettant l'écoulement du gaz de gonflage entre creux.

La figure 6 représente, vue en section méridienne, une variante de jante de roue, telle que montrée sur la figure 5, mais comportant sur sa face radialement intérieure (10) quatre nervures (35), équidistantes circonférentiellement les unes des autres, et présentant sur leurs bords axialement à l'extérieur des renflements (350), telle qu'une génératrice (351) radialement intérieure d'une nervure (35) a, sur le bord de la nervure, des points distants de l'axe de rotation de l'ensemble roulant d'une quantité inférieure à la distance séparant du même axe le point A de tangence avec la génératrice (20) de la paroi axialement et radialement intérieure du disque (2).

La roue, montrée sur l'une des figures 2 à 6, permet en outre, à dimension de pneumatique constante, l'augmentation du volume de gaz de gonflage, ce qui a pour avantage de diminuer la vitesse avec laquelle le pneumatique, monté sur une telle roue, perd sa pression par diffusivité.

## Revendications

1. Roue R composée d'une jante (1) avec un premier (13') et un deuxième (13") sièges de jante, au moins le premier siège de jante (13') ayant une génératrice dont l'extrémité axialement extérieure est sur un cercle de diamètre inférieur au diamètre du cercle sur lequel se trouve l'extrémité axialement intérieure , ledit premier siège de jante (13') étant prolongé axialement à l'extérieur par une saillie ou hump (15') de faible hauteur, et axialement à l'intérieur par une portée (11) destinée à recevoir un anneau de soutien de bande de roulement, et d'un disque de roue (2), réuni du côté du premier siège de jante (13') à la paroi radialement intérieure (10) de la jante (1), **caractérisée en ce que** la portée de jante (11) est, radialement à l'extérieur, munie d'éléments en relief (31) séparés par des évidements ou creux (30).

2. Roue selon la revendication 1, **caractérisée en ce que**, sur la majeure partie de la surface totale de la paroi radialement intérieure de la jante (1), chaque point d'une génératrice (10) de ladite paroi, compris entre le point de tangence A de ladite génératrice (10) avec la génératrice correspondante (20), axialement intérieure du disque (2), et l'extrémité B axialement située du côté du deuxième siège de jante (13"), est sur un cercle de diamètre D_{P}, au moins égal au diamètre D_{A} du cercle sur lequel se trouve le point de tangence A et au plus égal au diamètre D_{B} du cercle sur lequel se trouve l'extrémité B.

3. Roue selon la revendication 2, **caractérisée en ce** la majeure partie de la surface totale de la paroi radialement intérieure de la jante représente au moins 70% de ladite surface, et de préférence la totalité de ladite surface.

4. Roue selon l'une des revendications 1 à 3, **caractérisée en ce qu'**elle est avantageusement en matériau(x) de faible densité, tels que les métaux que sont l'aluminium, le magnésium et tous les alliages dérivés de ces métaux, ou tels que les matières thermoplastiques ou thermodurcissables, chargées ou non.

5. Roue selon l'une des revendication 2 à 4, **caractérisée en ce que** le passage du diamètre D_{A} au diamètre sur lequel se trouve le point B se fait de manière croissante et continue en allant axialement du point de tangence A à l'extrémité B.

6. Roue selon l'une des revendications 1 à 5, **caractérisée en ce que** le taux d'entaillement de la portée (11) de jante, rapport de la surface S_{E} occupée par les évidements ou creux sur la surface totale S_{T} de la face radialement extérieure de la portée (11), est compris entre 0,4 et 0,9.

7. Roue selon l'une des revendications 1 à 6, **caractérisée en ce que** les éléments en relief (31) sont, en plus des nervures circonférentielles (32), des nervures transversales ou quasi-transversales (31), rattachées aux nervures circonférentielles (32), et délimitant entre elles des creux (30) pouvant avoir des volumes variés.

8. Roue selon la revendication 7, **caractérisée en ce que** les nervures transversales (31) sont discontinues, un (des) canaux (311), rainures ou trous, séparant les branches de nervure.

9. Roue selon l'une des revendications 7 ou 8, **caractérisée en ce que** les nervures transversales (31) présentent sur la face radialement extérieure de la portée (11) des surfaces délimitées circonférentiellement par des côtés (310) rectilignes, faisant avec la direction circonférentielle un angle α au moins égal à 45°.

10. Roue selon l'une des revendications 1 à 6, **caractérisée en ce que** les éléments en relief (31) sont, d'une part au moins deux nervures circonférentielles (32) axialement à l'extérieur de la portée (11), et d'autre part des blocs ou plots (31) de matériau constituant la roue.

11. Roue selon l'une des revendications 1 à 10, **caractérisée en ce que** la jante (1) comprend une gorge de montage (12) située axialement vers le deuxième siège de jante (13") et **en ce qu'**un creux (30) est relié à la gorge de montage (12) par une rainure (33).

12. Roue selon la revendication 11, **caractérisée en ce que** le creux (30) reliée à la gorge de montage (12) est celui dans lequel débouche l'orifice de passage de la valve de gonflage (34).

13. Roue selon la revendication 2, **caractérisée en ce que** le deuxième siège de jante (13") a une génératrice dont l'extrémité axialement intérieure est, d'une part sur un cercle de diamètre égal au diamètre du cercle sur lequel se trouve l'extrémité axialement intérieure de la génératrice du premier siège de jante (13'), et d'autre part sur un cercle de diamètre supérieur au diamètre du cercle sur lequel se trouve son extrémité axialement extérieure, ladite deuxième génératrice étant prolongée axialement à l'extérieur par une saillie (15") et axialement à l'intérieur par un rebord de jante (14).

14. Roue selon la revendication 2, **caractérisée en ce que** le deuxième siège de jante (13") a une génératrice dont l'extrémité axialement intérieure est, d'une part sur un cercle de diamètre supérieur au diamètre du cercle sur lequel se trouve l'extrémité axialement intérieure de la génératrice du premier siège de jante (13'), et d'autre part sur un cercle de diamètre supérieur au diamètre du cercle sur lequel se trouve l'extrémité axialement extérieure, ladite deuxième génératrice étant aussi prolongée axialement à l'extérieur par une saillie (15") et axialement à l'intérieur par la génératrice d'une surface tronconique (36) assurant la liaison entre le siège (13") et la portée rebord de jante (14), et **en ce que** la génératrice (10) de la paroi radialement intérieure de la jante (1) a un profil méridien tronconique du point A, de tangence entre ledit profil et la paroi intérieure (20) du disque (2), à son extrémité B.

15. Roue selon la revendication 2, **caractérisée en ce qu'**elle comporte sur sa face radialement intérieure (10) quatre nervures (35), équidistantes circonférentiellement les unes des autres, et présentant sur leurs bords axialement à l'extérieur des renflements (350), telle qu'une génératrice (351) radialement intérieure d'une nervure (35) a, sur le bord de la nervure, des points distants de l'axe de rotation de l'ensemble roulant d'une quantité inférieure à la distance séparant le point A de tangence avec la génératrice (20) de la paroi axialement et radialement intérieure du disque (2).

## Patentansprüche

1. Rad R, das aus einer Felge (1) mit einem ersten (13') und einem zweiten (13") Felgensitz, wobei mindestens der erste Felgensitz (13') eine Erzeugende hat, deren äußeres Ende auf einem Kreis mit einem Durchmesser liegt, der kleiner ist als der Durchmesser des Kreises, auf dem sich das axial innere Ende befindet, und wobei der erste Felgensitz (13') axial nach außen durch einen Vorsprung oder Höcker (15') mit geringer Höhe und axial nach innen durch einen Bereich (11) verlängert ist, der dazu bestimmt ist, einen Unterstützungsring für die Lauffläche aufzunehmen, und aus einer Radscheibe (2) zusammengesetzt ist, die auf der Seite des ersten Felgensitzes (13') mit der radial inneren Wand (10) der Felge (1) vereint ist, **dadurch gekennzeichnet, daß** der Bereich der Felge (11) radial auf der Außenseite mit Entlastungselementen (31) versehen ist, die durch Aussparungen oder Aushöhlungen (30) getrennt sind.

2. Rad nach Anspruch 1, dadurch gekennzeichnert, daß über den Hauptteil der Gesamtfläche der radial inneren Wand der Felge (1) jeder Punkt einer Erzeugenden (10) der genannten Wand, der zwischen dem Tangierungspunkt A der genannten Erzeugenden (10) mit der entsprechenden, axial innerhalb der Scheibe (2) liegenden Erzeugenden (20) und dem Ende B liegt, das axial auf der Seite des zweiten Felgensitzes (13") gelegen ist, auf einem Kreis mit dem Durchmesser D_{P} liegt, der mindestens gleich ist dem Durchmesser D_{A} des Kreises, auf dem sich der Tangierungspunkt A befindet, und höchstens gleich dem Durchmesser D_{B} des Kreises, auf dem sich das Ende B befindet.

3. Rad nach Anspruch 2, **dadurch gekennzeichnet, daß** der Hauptteil der Gesamtfläche der radial inneren Wand der Felge mindestens 70% der genannten Fläche darstellt, und bevorzugt die Gesamtheit der genannten Fläche.

4. Rad nach einem der Ansprüche 1 bis 3, **dadurch gekennzeichnet, daß** es vorteilhafterweise aus Material(ien) geringer Dichte besteht, wie aus Metallen, die Aluminium, Magnesium oder alle Legierungen sind, die von diesen Metallen abgeleitet sind, oder wie aus thermoplastischen oder duroplastischen Materialien mit oder ohne Zuschlagstoffen.

5. Rad nach einem der Ansprüche 2 bis 4, **dadurch gekennzeichnet, daß** der Übergang des Durchmessers D_{A} auf den Durchmesser, auf dem sich der Punkt B befindet, in zunehmender oder kontinuierlicher Weise erfolgt, indem man axial vom Tangierungspunkt A bis zum Ende B vorangeht.

6. Rad nach einem der Ansprüche 1 bis 5, **dadurch gekennzeichnet, daß** das Maß der Einkerbung des Bereichs (11) der Felge, bezogen auf die Oberfläche S_{E}, die durch die Aussparungen oder Aushöhlungen auf der Gesamtfläche S_{T} der radial äußeren Fläche des Bereichs (11) eingenommen wird, zwischen 0,4 und 0,9 liegt.

7. Rad nach einem der Ansprüche 1 bis 6, **dadurch gekennzeichnet, daß** die vorspringenden Elemente (31) zuzüglich zu den Umfangsrippen (32), den Querrippen oder den gewissermaßen querverlaufenden Rippen (31) an den Umfangsrippen (32) angesetzt sind und zwischeneinander Hohlräume (30) begrenzen, die unterschiedliche Volumina haben können.

8. Rad nach Anspruch 7, **dadurch gekennzeichnet, daß** die Querrippen (31) diskontinuierlich bzw. unterbrochen sind, wobei ein Kanal bzw. Kanäle (311), Rillen oder Löcher die Zweige der Rippe trennen.

9. Rad nach einem der Ansprüche 7 oder 8, **dadurch gekennzeichnet, daß** die Querrippen (31) auf der radial äußeren Fläche des Bereiches (11) Flächen aufweisen, die durch geradlinige Seiten (310) begrenzt sind, die zur Umfangsrichtung einen Winkel von mindestens 45° bilden.

10. Rad nach einem der Ansprüche 1 bis 6, **dadurch gekennzeichnet, daß** die vorspringenden Elemente (31) einerseits mindestens zwei Umfangsrillen (32) axial auf der Außenseite des Bereiches (11) und andererseits Blöcke oder Klötze (31) aus Material sind, das das Rad bildet.

11. Rad nach einem der Ansprüche 1 bis 11, **dadurch gekennzeichnet, daß** die Felge (1) eine Montagenut (12) aufweist, die axial gegen den zweiten Felgensitz (13") hin gelegen ist, und daß eine Höhlung (30) mit der Montagenut (12) durch eine Rille (33) verbunden ist.

12. Rad nach Anspruch 12, **dadurch gekennzeichnet, daß** die Höhlung (30), die mit der Montagenut (12) verbunden ist, die ist, in die die Durchlaßöffnung des Aufpumpventils (34) einmündet.

13. Rad nach Anspruch 2, **dadurch gekennzeichnet, daß** der zweite Felgensitz (13") eine Erzeugende hat, deren axial inneres Ende einerseits auf einem Kreis mit einem Durchmesser liegt, der gleich ist dem Durchmesser des Kreises, auf dem sich das axial innere Ende der Erzeugenden des ersten Felgensitzes (13') befindet, und andererseits auf einem Kreis mit einem Durchmesser, der größer ist als der Durchmesser des Kreises, auf dem sich ihr axial inneres Ende befindet, wobei die genannte zweite Erzeugende axial nach außen durch einen Vorsprung (15") und axial nach innen durch einen Felgenrand (14) verlängert ist.

14. Rad nach Anspruch 2, **dadurch gekennzeichnet, daß** der zweite Felgensitz (13") eine Erzeugende hat, deren axial inneres Ende einerseits auf einem Kreis mit einem Durchmesser liegt, der größer ist als der Durchmesser des Kreises, auf dem sich das axial innere Ende der Erzeugenden des ersten Felgensitzes (13') befindet, und andererseits auf einem Kreis mit einem Durchmesser, der größer ist als der Durchmesser des Kreises, auf dem sich ihr axial inneres Ende befindet, wobei die genannte zweite Erzeugende ebenfalls axial nach außen durch einen Vorsprung (15") und axial nach innen durch die Erzeugende einer kegelstumpfförmigen Fläche (36) verlängert ist, die die Verbindung zwischen dem Sitz (13") und dem Felgen-Randbereich (14) sicherstellt, und daß die Erzeugende (10) der radial inneren Wand der Felge (1) ein kegelstumpfförmiges Meridianprofil vom Punkt A aus hat, das zur Tangierung zwischen dem genannten Profil und der Innenwand (20) der Scheibe (2) an seinem Ende B führt.

15. Rad nach Anspruch 2, **dadurch gekennzeichnet, daß** es auf seiner radial inneren Fläche (10) vier in Umfangsrichtung voneinander gleich beabstandete Rippen (35) aufweist, die an ihren Rändern axial auf der Außenseite Verstärkungen (350) aufweisen, und eine radial innere Erzeugende (351) einer Rippe (35) über dem Rand der Rippe Punkte hat, die von der Drehachse der rollenden Baugruppe um einen Betrag beabstandet sind, der kleiner ist als der Abstand, der den Tangierungspunkt A mit der Erzeugenden (20) von der axial und radial inneren Wand der Scheibe (2) trennt.

## Claims

1. A wheel R, formed of a rim (1) having a first rim seat (13') and a second rim seat (13"), at least the first rim seat (13') having a generatrix the axially outer end of which is on a circle of a diameter less than the diameter of the circle on which the axially inner end is located, said first rim seat (13') being extended axially to the outside by a protrusion or hump (15') of low height and axially to the inside by a bearing surface (11) intended to receive a tread support ring, and of a wheel disc (2) connected on the side of the first rim seat (13') to the radially inner wall (10) of the rim (1), **characterised in that** the rim bearing surface (11) is provided, radially to the outside, with elements in relief (31) which are separated by recesses or hollows (30).

2. A wheel according to Claim 1, **characterised in that** on the major part of the entire surface of the radially inner wall of the rim (1), each point of a generatrix (10) of said wall contained between the point of tangency A of said generatrix (10) with the corresponding axially inner generatrix (20) of the disc (2) and the end B located axially on the side of the second rim seat (13") is on a circle of a diameter D_{P} at least equal to the diameter D_{A} of the circle on which the point of tangency A is located and at most equal to the diameter D_{B} of the circle on which the end B is located.

3. A wheel according to Claim 2, **characterised in that** the major part of the entire surface of the radially inner wall of the rim represents at least 70% of said surface, and preferably all of said surface.

4. A wheel according to one of Claims 1 to 3, **characterised in that** it is made advantageously of a material or materials of low density, such as the metals aluminium and magnesium and all alloys derived from said metals, or such as thermoplastic or thermosetting materials, whether or not filled.

5. A wheel according to one of Claims 2 to 4, **characterised in that** the passage from the diameter D_{A} to the diameter on which the point B is located increases in a continuous manner proceeding axially from the point of tangency A to the end B.

6. A wheel according to one of Claims 1 to 5, **characterised in that** the groove ratio of the rim bearing surface (11), namely the ratio of the surface S_{E} occupied by the recesses or hollows to the total surface S_{T} of the radially outer face of the bearing surface (11), is between 0.4 and 0.9.

7. A wheel according to one of Claims 1 to 6, **characterised in that** the elements in relief (31) are, in addition to circumferential ribs (32), transverse or quasi-transverse ribs (31) attached to the circumferential ribs (32) and defining between them hollows (30) which may be of different volumes.

8. A wheel according to Claim 7, **characterised in that** the transverse ribs (31) are discontinuous, one or more channels (311), grooves or holes separating the rib branches.

9. A wheel according to one of Claims 7 or 8, **characterised in that** the transverse ribs (31) have, on the radially outer face of the bearing surface (11), surfaces defined circumferentially by rectilinear sides (310) forming an angle α of at least 45° with the circumferential direction.

10. A wheel according to one of Claims 1 to 6, **characterised in that** the elements in relief (31) are, on the one hand, at least two circumferential ribs (32) axially to the outside of the bearing surface (11) and, on the other hand, blocks (31) of material constituting the wheel.

11. A wheel according to one of Claims 1 to 10, **characterised in that** the rim (1) comprises a mounting groove (12) located axially towards the second rim seat (13") and **in that** a hollow (30) is connected to the mounting groove (12) by a channel (33).

12. A wheel according to Claim 11, **characterised in that** the hollow (30) connected to the mounting groove (12) is the one in communication with the passage orifice of the inflation valve (34).

13. A wheel according to Claim 2, **characterised in that** the second rim seat (13") has a generatrix the axially inner end of which is, on the one hand, on a circle of a diameter equal to the diameter of the circle on which the axially inner end of the generatrix of the first rim seat (13') is located and, on the other hand, on a circle of a diameter greater than the diameter of the circle on which its axially outer end is located, said second generatrix being extended axially to the outside by a protrusion (15") and axially to the inside by a rim flange (14).

14. A wheel according to Claim 2, **characterised in that** the second rim seat (13") has a generatrix the axially inner end of which is, on the one hand, on a circle of a diameter greater than the diameter of the circle on which the axially inner end of the generatrix of the first rim seat (13') is located and, on the other hand, on a circle of a diameter greater than the diameter of the circle on which the axially outer end is located, said second generatrix also being extended axially to the outside by a protrusion (15") and axially to the inside by the generatrix of a frustoconical surface (36) ensuring the connection between the seat (13") and the rim flange bearing surface (14), and **in that** the generatrix (10) of the radially inner wall of the rim (1) has a frustoconical meridian profile from the point A of tangency between said profile and the inner wall (20) of the disc (2) to its end B.

15. A wheel according to Claim 2, **characterised in that** it comprises, on its radially inner face (10), four ribs (35), circumferentially equidistant from each other, having on their axially outer edges bulges (350), such that a radially inner generatrix (351) of a rib (35) has, on the edge of the rib, points spaced from the axis of rotation of the rolling assembly by an amount less than the distance separating the point A of tangency with the generatrix (20) from the axially and radially inner wall of the disc (2).
